# EUROPEAN PATENT APPLICATION

(11) **EP 4 006 186 A1**
(43) Date of publication of application: **01.06.2022**
(21) Application number: 20848016.0
(22) Date of filing: 29.07.2020
(51) Int. Cl.: C22B 5/12

(54) **METHOD FOR PREPARING ELEMENTAL MATERIAL BY USING REDUCTION OF MONOATOMIC CARBON**

(30) Priority: 29.07.2019 CN 201910689302
(71) Applicant: Sun, Xuyang, Jiaxing, Zhejiang 314001 (CN)
(72) Inventor: Sun, Xuyang, Jiaxing, Zhejiang 314001 (CN)
(74) Representative: ABG Intellectual Property Law, S.L.
(86) International application number: PCT/CN2020/105339
(87) International publication number: WO 2021/018159

(57) **Abstract**

Disclosed is a method for preparing an elemental material by reduction using monoatomic carbon, comprising: in a melt medium at a temperature of from 300°C to 1500°C, cracking an organic carbon source into atomic carbon and dissolving the atomic carbon in the melt medium, allowing the atomic carbon to reduce an elemental precursor compound present in the melt medium by an oxidation-reduction reaction to generate an elemental material, and obtaining the elemental material by supersaturating and crystallizing. The method of the present invention can prepare the elemental materials with high quality by self-crystallization growth at a lower temperature and at a lower cost.

## Description

### Technical Field

### CROSS-REFERENCE TO RELATED APPLICATIONS

The present application claims the benefit of priority to Chinese Patent Application No. 201910689302.7, filed on July 29, 2019, the disclosures of which are incorporated herein in their entirety by reference.

### Technical Field

The present invention relates to the field of materials, and more particularly, to a method for preparing an elemental material by reduction using monoatomic carbon.

### Background Art

Elemental materials comprise metals and non-metals. As special functional materials and structural materials, the elemental materials are basic materials for various high-end manufacturing industries, and their products are widely used in high-tech fields such as aviation, aerospace, shipbuilding, nuclear industry, electronics, automobiles, and new energy. However, substances in nature rarely exist in the form of elemental substances, and most of them exist in the form of compounds such as oxides, carbides, nitrides, sulfides, various acid salts, and the like. For this reason, it is necessary to reduce the compounds to obtain the elemental materials. The main methods are thermal reduction and electrolysis. Among them, metal thermal methods such as carbothermal method, silicon thermal method, aluminothermic method and magnesium thermal method are commonly used thermal reduction methods. However, the above methods generally require high-temperature reaction, high energy consumption and high cost. For example, the carbothermal reduction is carried out at a blast furnace temperature ranging from 1000°C to 1400°C to make iron; the aluminothermic reduction is carried out at a temperature ranging from 1600°C to 1700°C to produce silicon; and the Pidgeon process using ferrosilicon (Si-Fe) as a reducing agent is carried out at a high temperature ranging from 1200°C to 1250°C and a high vacuum ranging from 1 to 13Pa to produce magnesium. In addition, the crystallinity of the obtained elemental materials is not good, and it is generally polycrystalline or amorphous.

Therefore, there is an urgent need for a non-high temperature method for preparing an elemental material, which can prepare the elemental material with high quality by self-crystallization growth at a lower temperature and at a lower cost.

### Disclosure

The present invention has been made in view of the above problems of the prior art, and is directed to provide a method for preparing an elemental material by reduction using monoatomic carbon, which can prepare the elemental material with high quality by self-crystallization growth at a lower temperature and at a lower cost.

According to the present invention, the method for preparing an elemental material by reduction using monoatomic carbon comprises: in a melt medium at a temperature of from 300°C to 1500°C, cracking an organic carbon source into atomic carbon and dissolving the atomic carbon in the melt medium, allowing the atomic carbon to reduce an elemental precursor compound present in the melt medium by an oxidation-reduction reaction to generate an elemental material, and obtaining the elemental material by supersaturating and crystallizing.

Hereinafter, the method for preparing an elemental material by reduction using monoatomic carbon according to the present invention will be described in more detail.

The elemental materials which can be prepared by the present invention comprise elemental metals and elemental non-metals, in particular, comprising, but not limited to metals Mg, Zn, Cu, Fe, Li, Ge, V, Cr, Ni, Co, Mn, Bi, Ti, Mo, Y, Ir, W, Pt, Ta, Nb, Re, Hf, Pd and Zr, and non-metals B and Si, and more preferably Mg, Cu, Fe, Li, Ge, Ni, Co, Ti, Pt, Nb, Zr, B and Si.

The elemental precursor compound refers to a compound comprising the element of the elemental material which is to be prepared by the invention, including but not limited to oxides of the element, nitrides of the element, sulfides of the element, and salts containing the element. Preferably, the elemental precursor compound comprises the oxides of the element or the salts containing the element, and more preferably the oxides of the element. In the present invention, the elemental precursor compound is preferably used in the form of powder by grinding, preferably in the form of powder having a particle size of 900 to 8000 mesh.

The melt medium refers to a melt of one or more selected from the group consisting of inorganic salts, inorganic bases, oxides, nitrides, carbides, metals and alloys. At a temperature of from 300°C to 1500°C, the organic carbon source is cracked to form atomic carbon, and the atomic carbon does not react with the melt medium, or the atomic carbon reacts with the melt medium only to form the elemental material to be prepared, and the atomic carbon has a maximum solubility of not less than 10⁻⁷ (g/100g) in the melt medium. Preferably, the melt medium is an inorganic salt having a melting point less than 810°C or a mixture thereof, an inorganic base having a melting point less than 400°C or a mixture thereof, or a low-melting-point alloy having a melting point less than 500°C. Specifically, the inorganic salt, for example, may be magnesium chloride, sodium chloride, potassium chloride, lithium chloride, calcium chloride, aluminum chloride, potassium fluoride, sodium fluoride, lithium fluoride, sodium nitrate, potassium nitrate, lithium sulfate, or sodium sulfate. The inorganic base may be sodium hydroxide, potassium hydroxide, lithium hydroxide, or aluminum hydroxide. The alloys comprise binary, ternary, quaternary and quinary alloys comprised of Bi and one or more selected from the group consisting of Sn, Pb, In, Cd, Hg and Zn; alloys of Bi and Pt; binary, ternary and quaternary alloys comprised of Pb and one or more selected from the group consisting of Sn, In, Cd and Hg; and alloys of Sn and Cd.

The organic carbon source comprises one or more carbon-containing organic substances selected from the group consisting of aliphatic hydrocarbons, aromatic hydrocarbons, hydrocarbon derivatives and carbon-containing polymers. The above-mentioned organic carbon source may be completely cracked at a temperature of from 300°C to 1500°C, preferably from 300°C to 1000°C.

In the present invention, the method for preparing an elemental material by reduction using monoatomic carbon further comprises separating the elemental material after the elemental material is supersaturated and crystallized, and obtaining the purified elemental material by water washing, acid washing and/or base washing.

More specifically, if a density of the elemental material is greater than a density of the melt medium, the element material may sink to the bottom of the melt medium, and the element material at the bottom may be separated, and washed with water, an acid and/or a base to remove the melt medium attached thereon and obtain the purified elemental material.

If the density of the elemental material is less than the density of the melt medium, the element material may float to the surface of the melt medium, and the element material on the surface of the melt medium may be separated by gravity flotation, and washed with water, an acid and/or a base to remove the melt medium attached thereon and obtain the purified elemental material.

If the elemental material is suspended in the melt medium, the reaction mixture is cooled and then washed with water, an acid and/or a base to remove the solidified melt medium after cooling, and obtain the purified elemental material.

In the present invention, the method for preparing an elemental material by reduction using monoatomic carbon according to the present invention further comprises adding a crystal of the elemental material as a seed crystal in the melt medium, to promote crystallization of the elemental material after supersaturation.

The core technology of the method according to the present invention is that the atomic carbon obtained by cracking the organic carbon source in the high-temperature melt medium has extremely strong reducibility, and can directly cut the bonds of the elementary precursor compound at a very low temperature to release the atoms of the element, which can crystallize directly to generate the elemental material. Therefore, the present invention has the following advantages:
(1) In the present invention, the elemental material can be prepared by reduction using monoatomic carbon at a low cost owing to a very low process temperature, low energy consumption and less pollution. For example, when a NaCl/KCl mixed molten salt and a glucose carbon source are used, the process temperature may be about 900°C. However, the conventional carbothermic reduction requires a high temperature of from 1500°C to 2000°C.
(2) According to the method for preparing an elemental material by reduction using monoatomic carbon, the monoatomic carbon has extremely strong reducibility, and thus some elemental materials which can only be reduced by electrolysis in the prior art can be prepared by thermal reduction. Especially, when the elemental material is reduced by the electrolysis using a molten electrolyte, a high temperature is required to melt the precursor substance, and an electrolytic current is also required, resulting in high energy consumption and high cost. However, the method according to the present invention has simple process and low cost.
(3) The elemental materials prepared by the method of the present invention have low impurity content and high purity owing to self-crystallization growth.
(4) The elemental materials prepared by the method of the present invention have high crystal quality owing to self-crystallization growth. High-purity single crystals can be prepared by process control.

Therefore, according to the present invention, the elemental materials prepared by reduction using monoatomic carbon have excellent performances and quality with low production cost, high efficiency and less pollution.

### Brief Description of Drawings

FIG. 1 is an XRD spectrum of Ni prepared by reduction using monoatomic carbon in Example 1 according to the present invention;
FIG.2 is a SEM photograph showing the morphology of silica as the raw material of silicon dioxide fine powder used in Example 4 according to the present invention; and
FIG.3 is a SEM photograph of the elemental silicon prepared by the first reduction in Example 4 according to the present invention, and shows EDS energy spectrum analysis on elements and element contents for the prepared elemental silicon.

### Best Mode for Carrying out the Invention

Hereinafter, the present invention will be illustrated in more detail with reference to the following examples, but the protection scope of the present invention is not limited thereto.

### Example 1

30g of nickel oxide (NiO) was ball-milled into powder.

In a vacuum chamber, 500g of MgCl₂ was added into a flat-bottomed tank container, and heated to above 900°C to form a molten salt. Then, 30g of NiO powder (as an elemental Ni precursor compound) was gradually added from the surface of the molten salt, and uniformly dispersed in the molten salt by a stirring device while it settled down. In the meantime, acetylene gas as an organic carbon source was continuously introduced into the molten salt, and cracked into atomic carbon and a hydrogen-containing gas at the high temperature, wherein the gas was released, and the atomic carbon was dissolved and diffused in the molten salt, and reduced the NiO dispersed in the melt to generate Ni. Subsequently, the nickel powder sank to the bottom of the high-temperature molten salt, and the resultant was cooled to room temperature. Then, water was added into the cooled crystalline substance to dissolve MgCl₂, the resultant solution was filtered to obtain a mixture of Ni and a small amount of unreacted NiO, and then the mixture was immersed in ammonia water for 120 hours so that NiO was dissolved. After filtering and drying, 19 g of pure nickel powder was obtained.

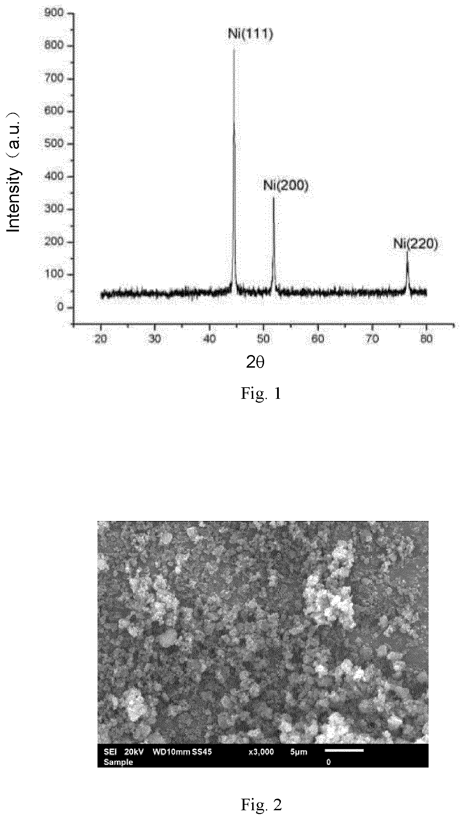

Figure 1 is the XRD spectrum of the prepared Ni.

### Example 2

In a vacuum chamber, a Bi/In alloy (Bi:In=21.5:78.5 (based on atomic fraction ratio), its melting point is only 72°C) was added into a flat-bottomed tank container, and heated to 700°C to form the alloy melt. ZrF₄ powder (ZrF₄ melting point: 640°C, as an elemental Zr precursor compound) was transported into the flat-bottomed tank container by using a vertical transport screw, and melted simultaneously. The pressurized acetylene was introduced into the alloy melt through a round tube, and cracked into atomic carbon at the high temperature, wherein the atomic carbon was dissolved and diffused in the alloy melt, and reduced the ZrF₄ dispersed in the alloy melt to generate Zr. As the Bi/In alloy had a density of about 10g/cm³, Zr eventually floated to the surface of the high-temperature alloy melt. The floated Zr product was removed from the surface of the alloy melt by a horizontal scraper and collected, and then washed with hot water at 95°C by ultrasonic cleaning to remove a little of remained Bi/In alloy and to give sponge-like Zr product.

### Example 3

To a cylindrical nickel container, 500g of anhydrous borax (Na₂B₄O₅(OH)₄) was added, and heated to 950°C and melt to be in a glassy state. 100g of Bisphenol A as an organic carbon source was transferred into the container by using a vertical transfer screw, stirred and uniformly dispersed in the melt, and then completely cracked into atomic carbon. The atomic carbon was dissolved, and reduced acidic oxide B₂O₃ (as an elemental B precursor compound) contained in the melt to generate elemental boron B. After being cooled to room temperature, the mixture of the elemental boron B and the recrystallized anhydrous borax was washed with water and filtered repeatedly. Finally, the pure elemental boron B was obtained because the anhydrous borax was easily soluble in water to be removed.

### Example 4

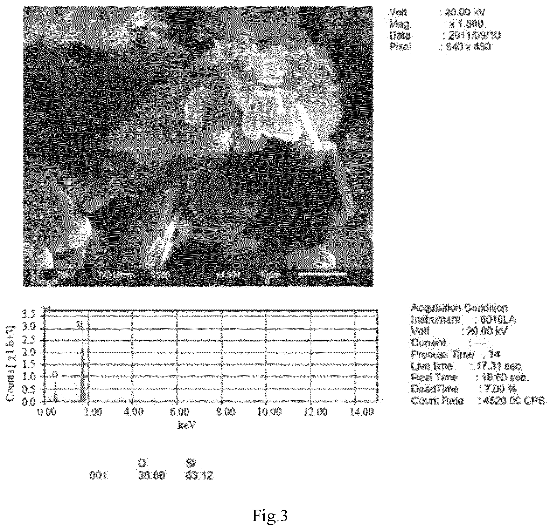

To a stainless steel tank container, 200g of NaCl and 20g of sucrose as an organic carbon source were added and mixed uniformly, and 10g of fumed silica as an elemental Si precursor compound was added into the bottom of the container. As shown in Figure 2, it can be found that the fumed silica was an aggregate of nano-silica, and the nano-silica has an average particle diameter of 20-30 nm. The resulting mixture was heated to above 900°C to form a melt, kept for 6 hours, and then slowly cooled to room temperature. Firstly, the carbon source was cracked into atomic carbon in the molten salt, the silica floated in the molten salt, thereby the atomic carbon dissolved in the molten salt reduced the floating silica. Part of silica was reduced to form silicon crystals, part of silica was not reduced, and part of the atomic carbon was supersaturated and precipitated to form carbon black and graphene-like carbon, which were attached to the silica. In the process of reduction growth, the silicon crystals increased in size and density, and gradually sank to the bottom of the container. The unreduced silica, together with the attached carbon thereon, floated to the surface of the molten salt. After cooling, the lower mixture in the container was taken out, washed repeatedly with water to remove NaCl salt crystal, and filtered and dried to obtain a powder having a high silicon content (see Figure 3).

From the SEM photograph of the obtained product in Figure 3, it could be found that the silicon crystals in the silicon powder have grown obviously, and particle size of the silicon crystals could be up to 10µm or more (growing from tens of nanometers to tens of micrometers, i.e. thousands of times growth). From analyses on EDS energy spectrum, the content ratio of Si to O was much higher than that in SiO₂.

Again, to the stainless steel tank container, 200g of NaCl, the above powder having a high silicon content and 10g of sucrose as the organic carbon source were added and mixed uniformly, heated to above 900°C to form a melt, kept for 6 hours, and slowly cooled to room temperature; and then the lower mixture in the container was taken out, washed repeatedly with water to remove NaCl salt crystal, and filtered and dried to obtain a powder having a higher silicon content. This process was repeated 10 times to obtain silicon powder with higher purity.

### Example 5

To two stainless steel tank containers A and B, NaCl was added, and heated to 900°C to form a melt, wherein vitamin C as an organic carbon source was continuously added to tank container A and stirred, and quartz powder as an elemental Si precursor compound was continuously added to tank container B and stirred. To a stainless steel tank container C, NaCl was added, and heated to above 850°C to form a melt, wherein a group of bare silicon wafers (pure silicon wafers without silica layer on the surfaces) were put therein. The tank containers A, B and C were connected in sequence. Firstly, the carbon source was cracked into atomic carbon [C] in the molten salt of tank container A, then the atomic carbon was diffused into tank container B and it reduced the quartz powder to atomic silicon [Si] therein, after that, the atomic silicon [Si] was diffused into tank container C, supersaturated and precipitated as silicon crystals by using the silicon wafers as mother crystal. After a period of time, the grown silicon plates were taken out.

Example 5 is different from Example 4 as follows. On the one hand, the silicon wafers were put in advance so that the silicon crystals grew faster by using the silicon wafers as the mother crystal and had better crystal quality; on the other hand, there were no precursor compound SiO₂ and C in the growth area, which could avoid introduction of impurities into the product, so that high-purity crystalline silicon could be grown on the silicon wafers.

It should be understood that the foregoing examples are only for illustrating embodiments of the present invention and are not to be construed as limiting the present invention. Although the invention has been described in detail with reference to the examples, it will be appreciated by those skilled in the art that modifications and changes may be made in these examples without departing from the principles and spirit of the invention, the scope of which is defined in the appended claims and their equivalents.

## Claims

1. A method for preparing an elemental material by reduction using monoatomic carbon, comprising: in a melt medium at a temperature of from 300°C to 1500°C, cracking an organic carbon source into atomic carbon and dissolving the atomic carbon in the melt medium, allowing the atomic carbon to reduce an elemental precursor compound present in the melt medium by an oxidation-reduction reaction to generate an elemental material, and obtaining the elemental material by supersaturating and crystallizing.

2. The method for preparing an elemental material by reduction using monoatomic carbon according to claim 1, wherein the elemental material comprises one or more selected from the group consisting of Mg, Zn, Cu, Fe, Li, Ge, V, Cr, Ni, Co, Mn, Bi, Ti, Mo, Y, Ir, W, Pt, Ta, Nb, Re, Hf, Pd, Zr, B and Si.

3. The method for preparing an elemental material by reduction using monoatomic carbon according to claim 2, wherein the elemental material comprises one or more selected from the group consisting of Mg, Cu, Fe, Li, Ge, Ni, Co, Ti, Pt, Nb, Zr, B and Si.

4. The method for preparing an elemental material by reduction using monoatomic carbon according to any one of claims 1 to 3, wherein the elemental precursor compound is selected from the group consisting of oxides of the element, nitrides of the element, sulfides of the element, and salts containing the element.

5. The method for preparing an elemental material by reduction using monoatomic carbon according to claim 4, wherein the elemental precursor compound is selected from the oxides of the element.

6. The method for preparing an elemental material by reduction using monoatomic carbon according to any one of claims 1 to 3, wherein the melt medium is a melt of one or more selected from the group consisting of inorganic salts, inorganic bases, oxides, nitrides, carbides, metals and alloys;
preferably, the melt medium is an inorganic salt having a melting point less than 810°C or a mixture thereof, an inorganic base having a melting point less than 400°C or a mixture thereof, or a low-melting-point alloy having a melting point less than 500°C;
specifically, the inorganic salt, for example, is magnesium chloride, sodium chloride, potassium chloride, lithium chloride, calcium chloride, aluminum chloride, potassium fluoride, sodium fluoride, lithium fluoride, sodium nitrate, potassium nitrate, lithium sulfate, or sodium sulfate; the inorganic base is sodium hydroxide, potassium hydroxide, lithium hydroxide, or aluminum hydroxide; the alloys comprise binary, ternary, quaternary and quinary alloys comprised of Bi and one or more selected from the group consisting of Sn, Pb, In, Cd, Hg and Zn; alloys of Bi and Pt; binary, ternary and quaternary alloys comprised of Pb and one or more selected from the group consisting of Sn, In, Cd and Hg; and alloys of Sn and Cd.

7. The method for preparing an elemental material by reduction using monoatomic carbon according to any one of claims 1 to 3, wherein the organic carbon source comprises one or more carbon-containing organic substances selected from the group consisting of aliphatic hydrocarbons, aromatic hydrocarbons, hydrocarbon derivatives and carbon-containing polymers, and the organic carbon source can be completely cracked at a temperature of from 300°C to 1500°C.

8. The method for preparing an elemental material by reduction using monoatomic carbon according to any one of claims 1 to 3, further comprises separating the elemental material after the elemental material is supersaturated and crystallized, and obtaining the purified elemental material by water washing, acid washing and/or base washing.

9. The method for preparing an elemental material by reduction using monoatomic carbon according to claim 8, wherein, if a density of the elemental material is greater than a density of the melt medium, the element material sinks to the bottom of the melt medium, and the element material at the bottom is separated, and washed with water, an acid and/or a base to remove the melt medium attached thereon and obtain the purified elemental material;
if a density of the elemental material is less than a density of the melt medium, the element material floats to the surface of the melt medium, and the element material on the surface of the melt medium is separated by gravity flotation, and washed with water, an acid and/or a base to remove the melt medium attached thereon and obtain the purified elemental material; or
if the elemental material is suspended in the melt medium, the reaction mixture is cooled and then washed with water, an acid and/or a base to remove the solidified melt medium, and obtain the purified elemental material.

10. The method for preparing an elemental material by reduction using monoatomic carbon according to any one of claims 1 to 3, further comprises adding a crystal of the elemental material as a seed crystal in the melt medium, to promote crystallization of the elemental material after supersaturation.
